# FASCICULE DE BREVET EUROPEEN

(11) **EP 3 292 021 B1**
(45) Date de publication et mention de la délivrance du brevet: **20.12.2023**
(21) Numéro de dépôt: 16723412.9
(22) Date de dépôt: 15.04.2016
(51) Int. Cl.: B60Q 1/04, B60R 19/24, B60R 19/50

(54) **VEHICULE COMPRENANT UN BOUCLIER FIXE A UN PROJECTEUR**
FAHRZEUG MIT AN EINEM SCHEINWERFER ANGEBRACHTEM STEINSCHILD
VEHICLE COMPRISING A STONE SHIELD ATTACHED TO A HEADLIGHT

(30) Priorité: 06.05.2015 FR 1554075
(43) Date de publication de la demande: 14.03.2018
(73) Titulaire: Renault s.a.s, 92100 Boulogne Billancourt (FR)
(72) Inventeur: PERROTO, Fabrice, 78180 Montigny le Bretonneux (FR)
(74) Mandataire: Renault Group
(86) Numéro de dépôt international: PCT/FR2016/050878
(87) Numéro de publication internationale: WO 2016/177948

(56) Documents cités:
- EP-A1- 1 529 686
- WO-A1-2013/189064
- DE-A1- 10 228 464
- DE-A1-102008 038 842
- DE-A1-102009 006 439
- DE-A1-102009 011 898
- DE-A1-102013 006 328
- FR-A1- 2 975 953
- JP-A- 2002 370 574

## Description

L'invention se rapporte à un véhicule comprenant un bouclier fixé à un projecteur.

Sur certains types de véhicule, le bouclier possède une extension, qui est amenée à se positionner sur un projecteur dudit véhicule. Or, si cette extension n'est pas correctement arrimée à ce projecteur, elle peut constituer une surépaisseur dudit projecteur, qui est susceptible de se décoller voire d'être arrachée. Elle présente également le risque d'accrocher un piéton et donc de le blesser.

Les documents DE 102 28 464 A1 et DE 10 2009 006439 A1 décrivent des véhicules comprenant un montage particulier de bouclier sur des projecteurs.

Un véhicule selon l'invention possède un bouclier fixé à un projecteur, de manière à résoudre les problèmes précités.

L'invention a pour objet un véhicule comprenant un bouclier et un projecteur.

La principale caractéristique d'un véhicule selon l'invention est que ledit bouclier comprend une extension apte à se placer contre ledit projecteur, ladite extension étant fixée audit projecteur avec des moyens d'accroche réversibles, ne nécessitant pas l'utilisation d'un outil. Une fixation étroite de l'extension du bouclier au projecteur est rendue nécessaire, pour éviter que cette extension ne soit décollée ou même arrachée au contact d'un objet ou d'une personne. Ainsi, afin d'éviter que cette opération de fixation n'ajoute un temps trop long au procédé de fabrication d'un véhicule, des moyens de fixations rapides et faciles à mettre en oeuvre, de type clipsage, sont retenus. De cette manière, un opérateur placé le long d'une chaine de montage d'un véhicule, n'a plus qu'à exercer une poussée manuelle de l'extension sur le projecteur sans avoir recours à un outillage spécifique ni à une manipulation compliquée requérant de la précision. De même, si le bouclier était amené à être changé, l'extension peut facilement être désolidarisée du projecteur au moyen d'une poussée en sens inverse. L'extension est une pièce de taille réduite par rapport à l'ensemble du bouclier et constitue une prolongation de celui-ci. Avantageusement, il est supposé, que l'ensemble du bouclier est arrimé en d'autres points sur la carrosserie du véhicule et que la fixation de l'extension au projecteur ne constitue pas la seule zone d'ancrage du bouclier sur le véhicule.

Selon l'invention, le bouclier possède une structure interne et une peau, ladite extension étant fixée au projecteur au niveau de sa structure interne. La peau constitue l'élément visible du bouclier qui est destiné à venir araser la surface du projecteur. Une fois l'extension fixée au projecteur, la structure interne de ladite extension n'est en revanche plus visible.

Les moyens d'accroche comprennent au moins une excroissance déformable appartenant à l'un des deux éléments constitués par le projecteur et le bouclier et au moins un réceptacle appartenant à l'autre élément et apte à recevoir ladite excroissance déformable. Autrement dit, la fixation de l'extension au projecteur s'effectue au moyen de l'introduction d'au moins une excroissance déformable, pouvant par exemple être un plot ou une agrafe, dans un réceptacle pouvant par exemple être un trou, une ouverture ou une cavité. Avantageusement, cette introduction est réalisée par une simple poussée de l'extension vers le projecteur.

Chaque excroissance déformable possède une partie élargie déformable dont les dimensions sont supérieures à celles du réceptacle, si bien que l'insertion de ladite excroissance dans ledit réceptacle entraine une déformation de ladite partie élargie et nécessite un certain effort. Ainsi, lors de l'insertion de l'excroissance dans le réceptacle, la partie élargie de ladite excroissance est contrainte de se déformer élastiquement pour ramener temporairement ses dimensions à celles du réceptacle, pour pouvoir pénétrer dans ledit réceptacle.

De façon avantageuse, les moyens d'accroche comprennent deux excroissances déformables sous la forme de deux agrafes, et deux réceptacles sous la forme de deux ouvertures. De cette manière, les agrafes sont des pièces fines qui sont donc peu encombrantes et qui n'alourdissent pas le véhicule.

Avantageusement, les deux agrafes sont solidaires du projecteur et les deux ouvertures sont réalisées dans le bouclier. Il est supposé que les agrafes sont solidement et rigidement fixées au projecteur de sorte qu'elles ne puissent pas se déplacer par rapport à celui-ci lors de l'interaction entre l'extension du bouclier et ledit projecteur.

L'extension s'étend selon une direction sensiblement horizontale. Elle a donc tendance à barrer le projecteur horizontalement.

Les deux organes déformables et les deux réceptacles sont alignés suivant une direction sensiblement horizontale

De façon avantageuse, la surface externe de l'extension arase la surface externe du projecteur de manière à ce que ladite extension et ledit projecteur soient dans une parfaite continuité.

Un véhicule selon l'invention présente l'avantage de posséder un bouclier dont l'extension est une pièce fixée à un élément dudit véhicule, en l'occurrence un projecteur, et qui ne constitue plus une pièce susceptible d'être décollée ou arrachée. Il a de plus l'avantage de pouvoir être fabriqué aussi rapidement qu'un véhicule possédant un bouclier sans extension ou dont l'extension n'est fixée à aucun élément dudit véhicule, car la fixation de ladite extension est facile et rapide.

On donne, ci-après, une description détaillée d'un mode de réalisation préféré d'un véhicule selon l'invention, en se référant aux figures 1 à 3.
- La figure 1 est une vue en coupe axiale longitudinale simplifiée, d'une partie avant d'un véhicule selon l'invention,
- La figure 2 est une vue en perspective d'un projecteur selon l'invention, typiquement un projecteur avant gauche du véhicule,
- La figure 3 est une vue du projecteur de la figure 2 et d'une extension de bouclier fixée audit projecteur.

La description détaillée qui va suivre, s'effectue par rapport à un référentiel lié au véhicule, pour lequel l'axe X est un axe longitudinal du véhicule orienté vers l'arrière, l'axe Y est un axe transversal du véhicule orienté vers la droite et l'axe Z est un axe vertical orienté vers le haut.

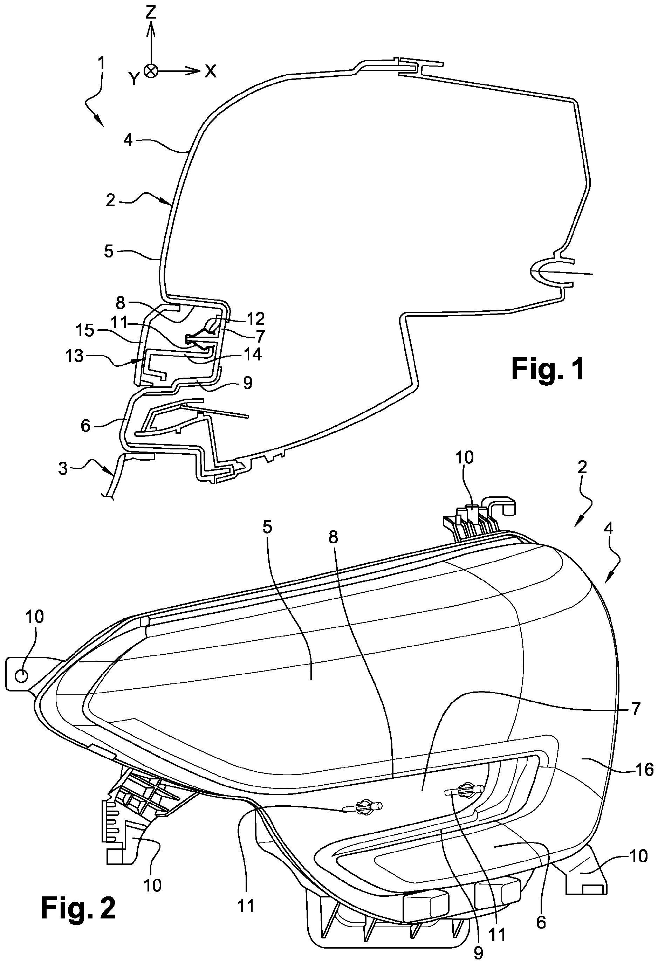

En se référant à la figure 1, un véhicule 1 selon l'invention comprend une partie avant dotée de deux projecteurs 2 et d'un bouclier 3, lesdits deux projecteurs 2 étant classiquement situés à l'avant et de chaque côté latéraux du véhicule. Les projecteurs sont alignés classiquement selon un axe horizontal et transversal Y dudit véhicule 1. Chaque projecteur 2 comprend une enveloppe 4 transparente et bombée, destinée à diffuser vers l'avant du véhicule les rayons lumineux émis par une source lumineuse placée dans le projecteur 2. L'invention est illustrée sur les figures en relation à un projecteur 2 avant gauche du véhicule étant entendu qu'un agencement symétrique s'applique à un projecteur avant droit, et que l'invention est applicable de la même façon à d'autres zones du véhicule (non illustrées) où cohabitent étroitement des moyens optiques et des pièces de carrosserie du véhicule.

En se référant aux figures 1, 2 et 3, en supposant que le projecteur 2 soit monté sur le véhicule, l'enveloppe 4 dudit projecteur comprend schématiquement une partie supérieure majoritaire 5, une partie inférieure 6 et une partie intermédiaire 7 intercalée entre ladite partie supérieure 5 et ladite partie inférieure 6, lesdites trois parties 5, 6, 7 s'étendant chacune selon axe horizontal et transversal Y du véhicule 1. Le qualificatif « majoritaire » s'entend ici en terme de surface frontale, visible depuis l'avant du véhicule. La partie supérieure 5 et la partie 6 inférieure présentent des surfaces en continuité, lesdites surfaces étant alignées dans un plan transversal Y et sensiblement vertical Z du véhicule. Autrement dit, la partie supérieure 5 et la partie inférieure 6 sont situées sensiblement à une même position longitudinale, considérée suivant la direction longitudinale X du véhicule. La partie intermédiaire 7 s'inscrit également dans un plan transversal Y et sensiblement vertical Z du véhicule, mais est située en retrait, vers l'arrière du véhicule, des surfaces de la partie supérieure 5 et de la partie inférieure 6 selon un axe longitudinal X du véhicule. De cette manière, le projecteur 2 ménage un évidement au niveau de la partie intermédiaire 7, s'étendant selon un axe horizontal et transversal Y du véhicule. L'évidement a une forme générale allongée s'étendant suivant la direction transversale Y du véhicule. Cet évidement est délimité au fond par la surface de la partie intermédiaire 7, qui forme le fond de l'évidement, en haut par un bord 8 de la partie supérieure 5 et en bas par un bord 9 de la partie inférieure 6, lesdits deux bords 8, 9 étant perpendiculaires au plan de ladite surface 7. Les bords 8, 9 rejoignent respectivement la partie supérieure 5 et la partie inférieure 6 par des surfaces de raccordement courbes.

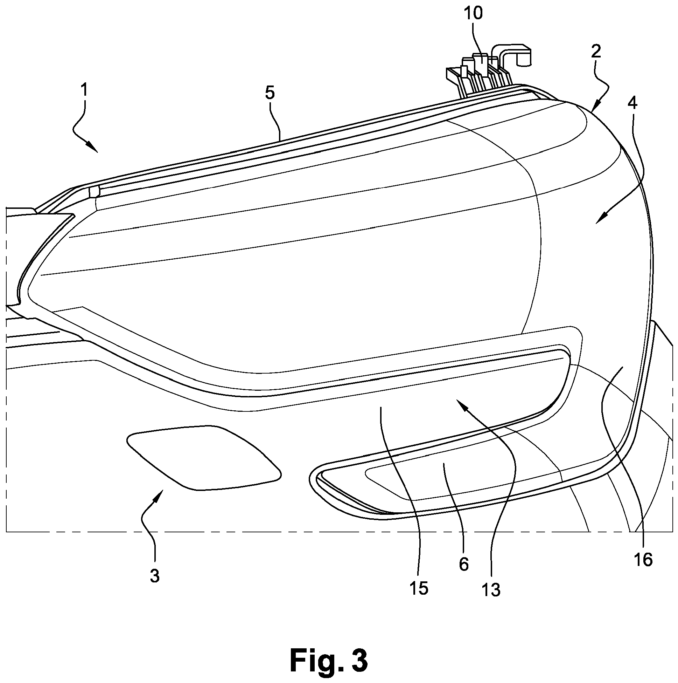

Dans l'exemple illustré aux figures 2 et 3, la partie supérieure 5 et la partie inférieure 6 se rejoignent par une partie latérale 16 située du côté latéral correspondant du véhicule, en contournant la partie intermédiaire 7. Cette jonction est assurée de façon continue à la même position longitudinale que les parties supérieure 5 et inférieure 6. La partie supérieure 5, la partie latérale 16 et la partie inférieure 6 présentent une surface frontale continue ayant la forme générale d'une crosse ou d'un U dont l'ouverture est tournée vers le plan médian vertical longitudinal du véhicule. La partie latérale 16 délimite de ce fait également l'évidement du côté latéral correspondant du véhicule.

En se référant à la figure 2, le projecteur 2 possède des pattes de fixation 10 réparties sur son bord périphérique pour être arrimé au véhicule.

En se référant aux figures 1 et 2, deux agrafes 11 déformables élastiquement, sont implantées dans la surface de la partie intermédiaire 7 du projecteur 2. Ces deux agrafes 11 sont fixes et sont alignées selon un axe horizontal et transversal Y du véhicule 1. Chaque agrafe 11 saille de la surface de la partie intermédiaire 7 de l'enveloppe 4 du projecteur 2, et présente une partie élargie 12 déformable élastiquement.

En se référant aux figures 1 et 3, le bouclier 3 comporte une extension 13 sous la forme d'une bande effilée dont les dimensions sont sensiblement inférieures à celles de l'évidement du projecteur 2. Dans sa globalité, le bouclier 3 comprend une structure interne 14 et une peau 15, ladite peau 15 constituant la partie visible du bouclier 3 une fois que celui-ci a été monté sur le véhicule 1. La structure interne 14 du bouclier 3 située au niveau de l'extension 13, comprend deux ouvertures dont les dimensions sont inférieures à celles de la partie élargie déformable 12 des agrafes 11.

L'extension 13 du bouclier 3 est destinée à venir se loger dans l'évidement du projecteur 2, de manière à ce que chaque agrafe 11 vienne s'insérer dans une ouverture de la structure interne 14 du bouclier 3 située au niveau de ladite extension 13. L'extension 13 se place de ce fait contre ledit projecteur 2 et à l'avant de celui-ci. L'extension 13 s'inscrit sensiblement dans les limites de l'évidement précité du projecteur 2. La surface frontale de l'extension 13 reçue dans l'évidement est conformée de façon sensiblement continue avec les surfaces adjacentes du projecteur, constituée par la partie supérieure 5, la partie inférieure 6 et la partie latérale 16. Dans l'exemple illustré aux figures 2 et 3, le bouclier 3 comporte une surface frontale contournant par l'intérieur la partie inférieure 6 du projecteur 2 de façon à faire apparaitre cette dernière au travers d'une découpe ménagée dans la forme du bouclier 2.

Ainsi, un procédé de fixation de l'extension 13 du bouclier 3 dans le projecteur 2 comprend les étapes suivantes :
- une étape de positionnement de l'extension 13 du bouclier 3 dans l'évidement du projecteur 2,
- une étape de poussée manuelle de l'extension 13 dans ledit évidement de manière à introduire chacune des agrafes 11 dans une ouverture de la structure interne 14 de l'extension 13 du bouclier 3,
- une étape de poursuite de la poussée jusqu'à ce que les parties élargies déformables 12 des agrafes 11 soient passées intégralement dans les ouvertures, après s'être déformées au moment de leur passage dans lesdites ouvertures. En effet, lesdites parties élargies 12 ont dû se rétrécir pour pouvoir passer les ouvertures dont les dimensions sont inférieures à celles desdites parties élargies 12. Une fois passées les ouvertures, les parties élargies 12 s'élargissent à nouveau pour retrouver leur forme initiale de repos.
- une étape d'arrêt de la poussée lorsque la peau 15 de l'extension arase les surfaces de la partie supérieure 5 et de la partie inférieure 6 de l'enveloppe 4 du projecteur 2.

## Revendications

1. Véhicule (1) comprenant un bouclier (3) possédant une structure interne (14) et une peau (15), et un projecteur (2) aligné selon un axe horizontal et transversal (Y) dudit véhicule (1), ledit bouclier (3) comprenant une extension (13) apte à se placer contre ledit projecteur (2), et à être fixée audit projecteur (2) au niveau de sa structure interne (14) avec des moyens d'accroche réversibles (11), ne nécessitant pas l'utilisation d'un outil, lesdits moyens d'accroche (11) comprenant au moins une excroissance déformable appartenant au projecteur (2) et au moins un réceptacle appartenant au bouclier (3) et apte à recevoir ladite excroissance déformable, **caractérisé en ce qu'**une enveloppe (4) du projecteur (2), transparente et bombée, et destinée à diffuser vers l'avant du véhicule les rayons lumineux émis par une source lumineuse placée dans le projecteur, comprend une partie supérieure (5), une partie latérale (16) et une partie inférieure (6) présentant des surfaces frontales en continuité, la partie supérieure (5), la partie latérale (16) et la partie inférieure (6) étant alignées dans un plan transversal (Y) et sensiblement vertical (Z) du véhicule, l'enveloppe comprenant en outre une partie intermédiaire (7) intercalée entre la partie supérieure (5) et la partie inférieure (6) et s'inscrivant dans un plan transversal (Y) et sensiblement vertical (Z) du véhicule et située en retrait des surfaces de la partie supérieure (5) et de la partie inférieure (6) vers l'arrière du véhicule selon un axe longitudinal X du véhicule, le projecteur (2) ménageant un évidement au niveau de la partie intermédiaire 7, s'étendant selon un axe horizontal et transversal (Y) du véhicule, l'évidement étant délimité au fond par la surface de la partie intermédiaire (7), qui forme le fond de l'évidement, en haut par un bord (8) de la partie supérieure (5) et en bas par un bord (9) de la partie inférieure (6), lesdits deux bords (8, 9) étant perpendiculaires au plan de ladite surface de la partie intermédiaire (7) et rejoignant respectivement la partie supérieure (5) et la partie inférieure (6), et **en ce que** l'extension (13) est logée dans l'évidement, les excroissances déformables étant implantées dans la surface de la partie intermédiaire (7), chaque excroissance déformable possédant une partie élargie (12) déformable dont les dimensions sont supérieures à celles du réceptacle si bien que l'insertion de ladite excroissance dans ledit réceptacle entraine une déformation de ladite partie élargie (12) et nécessite un certain effort.

2. Véhicule selon la revendication 1, **caractérisé en ce que** les moyens d'accroche (11) comprennent deux excroissances déformables sous la forme de deux agrafes et deux réceptacles sous la forme de deux ouvertures.

3. Véhicule selon l'une quelconque des revendications 1 ou 2, **caractérisé en ce que** l'extension (13) s'étend selon une direction sensiblement horizontale et transversale (Y) du véhicule.

4. Véhicule selon les revendications 2 et 3, **caractérisé en ce que** les deux excroissances déformables (11) et les deux réceptacles sont alignés suivant une direction sensiblement horizontale et transversale (Y) du véhicule.

5. Véhicule selon l'une quelconque des revendications 1 à 4, **caractérisé en ce que** l'extension (13) du bouclier (3) présente une surface frontale conformée de façon sensiblement continue avec les surfaces frontales adjacentes du projecteur (2), constituées par la partie supérieure 5, la partie inférieure 6 et la partie latérale 16.

## Patentansprüche

1. Fahrzeug (1), umfassend einen Stoßfänger (3), der eine innere Struktur (14) und eine Haut (15) besitzt, und einen Scheinwerfer (2), der gemäß einer horizontalen und quer verlaufenden Achse (Y) des Fahrzeugs (1) ausgerichtet ist, wobei der Stoßfänger (3) eine Erweiterung (13) umfasst, die geeignet ist, sich an den Scheinwerfer (2) anzulegen und an dem Scheinwerfer (2) an ihrer inneren Struktur (14) mit reversiblen Befestigungsmitteln (11) fixiert zu werden, die keine Verwendung eines Werkzeugs erfordern, wobei die Befestigungsmittel (11) mindestens einen verformbaren Vorsprung umfassen, der zu dem Scheinwerfer (2) gehört, und mindestens eine Aufnahme, die zu dem Stoßfänger (3) gehört und geeignet ist, den verformbaren Vorsprung aufzunehmen, **dadurch gekennzeichnet, dass** ein Gehäuse (4) des Scheinwerfers (2), das transparent und gewölbt ist und dazu bestimmt ist, die von einer in dem Scheinwerfer angeordneten Lichtquelle ausgesendeten Lichtstrahlen zur Front des Fahrzeugs hin zu streuen, einen oberen Teil (5), einen seitlichen Teil (16) und einen unteren Teil (6) umfasst, die durchgehende Stirnflächen aufweisen, wobei der obere Teil (5), der seitliche Teil (16) und der untere Teil (6) in einer quer verlaufenden (Y) und im Wesentlichen vertikalen (Z) Ebene des Fahrzeug ausgerichtet sind, wobei das Gehäuse ferner einen Zwischenteil (7) umfasst, der zwischen dem oberen Teil (5) und dem unteren Teil (6) angeordnet ist und in eine quer verlaufende (Y) und im Wesentlichen vertikale Ebene (Z) des Fahrzeugs einbeschrieben ist und von den Flächen des oberen Teils (5) und des unteren Teils (6) zum Heck des Fahrzeugs hin entlang einer Längsachse X des Fahrzeugs zurückspringt, wobei der Scheinwerfer (2) eine Ausnehmung an dem Zwischenteil 7 vorsieht, die sich entlang einer horizontalen und quer verlaufenden Achse (Y) des Fahrzeugs erstreckt, wobei die Ausnehmung am Boden durch die Fläche des Zwischenteils (7), die den Boden der Ausnehmung bildet, oben durch einen Rand (8) des oberen Teils (5) und unten durch einen Rand (9) des unteren Teils (6) begrenzt wird, wobei die beiden Ränder (8, 9) senkrecht zur Ebene der Fläche des Zwischenteils (7) verlaufen und an den oberen Teil (5) beziehungsweise den unteren Teil (6) anschließen, und dadurch, dass die Erweiterung (13) in der Ausnehmung aufgenommen ist, wobei die verformbaren Vorsprünge in die Fläche des Zwischenteils (7) eingesetzt sind, wobei jeder verformbare Vorsprung einen verformbaren aufgeweiteten Teil (12) besitzt, dessen Abmessungen größer als die der Aufnahme sind, so dass das Einführen des Vorsprungs in die Aufnahme zu einer Verformung des aufgeweiteten Teils (12) führt und eine gewisse Kraft erfordert.

2. Fahrzeug nach Anspruch 1, **dadurch gekennzeichnet, dass** die Befestigungsmittel (11) zwei verformbare Vorsprünge in Form von zwei Klammern und zwei Aufnahmen in Form von zwei Öffnungen umfassen.

3. Fahrzeug nach einem der Ansprüche 1 oder 2, **dadurch gekennzeichnet, dass** sich die Erweiterung (13) entlang einer im Wesentlichen horizontalen und quer verlaufenden Richtung (Y) des Fahrzeugs erstreckt.

4. Fahrzeug nach einem der Ansprüche 2 und 3, **dadurch gekennzeichnet, dass** die beiden verformbaren Vorsprünge (11) und die beiden Aufnahmen entlang einer im Wesentlichen horizontalen und quer verlaufenden Richtung (Y) des Fahrzeugs ausgerichtet sind.

5. Fahrzeug nach einem der Ansprüche 1 bis 4, **dadurch gekennzeichnet, dass** die Erweiterung (13) des Stoßfängers (3) eine Stirnfläche aufweist, die im Wesentlichen durchgängig mit den angrenzenden Stirnflächen des Scheinwerfers (2) gestaltet ist, die aus dem oberen Teil 5, dem unteren Teil 6 und dem seitlichen Teil 16 bestehen.

## Claims

1. Vehicle (1) comprising a protective moulding (3) having an internal structure (14) and a skin (15), and a headlight (2) aligned along a horizontal and transverse axis (Y) of said vehicle (1), said protective moulding (3) comprising an extension (13) that is able to be placed against said headlight (2), and to be fastened to said headlight (2) at its internal structure (14) with reversible attachment means (11), which do not require the use of a tool, said attachment means (11) comprising at least one deformable protrusion belonging to the headlight (2) and at least one receptacle belonging to the protective moulding (3) and able to receive said deformable protrusion, **characterized in that** a casing (4) of the headlight (2), which is transparent and curved, and intended to diffuse towards the front of the vehicle the light rays emitted by a light source placed in the headlight, comprises an upper part (5), a lateral part (16) and a lower part (6) that have frontal surfaces in the continuation of one another, the upper part (5), the lateral part (16) and the lower part (6) being aligned in a transverse (Y) and substantially vertical (Z) plane of the vehicle, the casing also comprising an intermediate part (7) interposed between the upper part (5) and the lower part (6) and inscribed in a transverse (Y) and substantially vertical (Z) plane of the vehicle and situated set back from the surfaces of the upper part (5) and lower part (6) towards the rear of the vehicle along a longitudinal axis X of the vehicle, the headlight (2) creating a recess at the intermediate part (7), extending along a horizontal and transverse axis (Y) of the vehicle, the recess being delimited at the end wall by the surface of the intermediate part (7), which forms the end wall of the recess, at the top by an edge (8) of the upper part (5) and at the bottom by an edge (9) of the lower part (6), said two edges (8, 9) being perpendicular to the plane of said surface of the intermediate part (7) and joining respectively the upper part (5) and the lower part (6), and **in that** the extension (13) is housed in the recess, the deformable protrusions being installed in the surface of the intermediate part (7), each deformable protrusion having a deformable widened part (12) of which the dimensions are greater than those of the receptacle so that the insertion of said protrusion into said receptacle leads to deformation of said widened part (12) and requires a certain amount of effort.

2. Vehicle according to Claim 1, **characterized in that** the attachment means (11) comprise two deformable protrusions in the form of two clips and two receptacles in the form of two openings.

3. Vehicle according to either one of Claims 1 and 2, **characterized in that** the extension (13) extends in a substantially horizontal and transverse direction (Y) of the vehicle.

4. Vehicle according to Claims 2 and 3, **characterized in that** the two deformable protrusions (11) and the two receptacles are aligned in a substantially horizontal and transverse direction (Y) of the vehicle.

5. Vehicle according to any one of Claims 1 to 4, **characterized in that** the extension (13) of the protective moulding (3) has a frontal surface shaped so as to be substantially continuous with the adjacent frontal surfaces of the headlight (2), which are constituted by the upper part 5, the lower part 6 and the lateral part 16.
